# EUROPEAN PATENT SPECIFICATION

(11) **EP 2 677 177 B1**
(45) Date of publication and mention of the grant of the patent: **14.10.2020**
(21) Application number: 12305730.9
(22) Date of filing: 22.06.2012
(51) Int. Cl.: F04D 29/058, F16C 32/04, H02K 7/09, H02K 7/08, H02K 7/14

(54) **ELECTRIC CENTRIFUGAL COMPRESSOR FOR VEHICLES**
ELEKTRISCHER ZENTRIFUGALVERDICHTER FÜR FAHRZEUGE
COMPRESSEUR CENTRIFUGE ÉLECTRIQUE POUR VÉHICULES

(43) Date of publication of application: 25.12.2013
(73) Proprietor: SKF MAGNETIC MECHATRONICS, 27950 Saint-Marcel (FR)
(72) Inventor: Lateb, Ramdane, 27200 Vernon (FR); Schroeder, Ulrich, 76130 Mont Saint Aignan (FR); Da Silva, joaquim, 45240 Sennely (FR); Ponson, Frédéric, 37230 Luynes (FR); Helene, Eric, 76350 OISSEL (FR)
(74) Representative: Cabinet Beau de Loménie

(56) References cited:
- WO-A1-94/29597
- WO-A1-03/072946
- DE-A1-102008 031 994
- US-A- 4 523 896
- US-B2- 6 927 517

## Description

### BACKGROUND OF THE INVENTION

### 1. Field of the Invention

The present invention relates to an electric centrifugal compressor which is more specifically adapted to be used in a Heat Ventilation Air Conditioning (HVAC) installation for vehicles.

The vehicles may include in particular terrestrial vehicles such as hybrid electric vehicles (HEV) or electric vehicles (EV) as well as aircrafts or other kinds of vehicles.

### 2. Description of the Related Art

Conventional Electric compressors, such as HVAC compressors for vehicles are typically associated with an electric motor.

An example of such electric motor driven compressor is given in patent document US 6 183 215 B1.

Such types of electric motor driven compressors have many drawbacks linked to lubrication, refrigerants, low operating speed, friction losses and loss of compactness.

Two main categories of HVAC electric compressors are used in HEV/EV vehicles: rotary like vane compressors and oscillating like scroll type compressors.

Both types of electric compressors which are associated with an electric motor have the following drawbacks:
- Lubricants are needed for different mechanical parts,
- It is necessary to check compatibility of lubricant oil with refrigerants (such as for example the haloalkane refrigerant R134a or the more recently used hydrofluoroolefin refrigerant HFO-1234yf),
- Lubricants should be carefully chosen to protect the electric motor windings from the risk of insulation failure,

- An oil separator and leak detection devices are required to avoid contamination of the electric systems in EV/HEV vehicles,
- The conventional electric compressors have a speed which is limited and cannot exceed 10,000 rpm,
- Friction losses are detrimental to the operation of the electric compressor.

Documents WO 94/29597, US 4 523 896, WO 03/072946 A1 and DE 10 2008 031994 A1 disclose a centrifugal compressor comprising an electric motor assembly and magnetic bearings.

Document US 6 927 517 B2 further discloses a rotary machine comprising a rotary shaft supported by radial magnetic bearings and an axial stop incorporating a current generator.

### SUMMARY OF THE INVENTION

Therefore, it is desired to provide an electric compressor which can solve most of these problems.

The invention is intended more especially, although not exclusively, to automotive air conditioning applications and therefore further aims at providing an electric compressor which takes into account the high level of vibrations generated in a vehicle.

The invention is defined in the appended claims.

According to an embodiment of the present invention, there is provided an electric compressor for a heat ventilation air conditioning system for vehicles, said electric compressor comprising a motor portion and a centrifugal compressor portion driven by said motor portion through a shaft, wherein it comprises electromagnetic means for levitating said shaft during functional operation of said electric compressor and auxiliary landing bearings, characterized in that said motor portion comprises an axial bearingless motor and said radial electromagnetic means for levitating said shaft comprise first and second radial bearingless motors.

The centrifugal compressor portion may comprise a single wheel, double wheels, tandem wheels or double tandem wheels.

According to a particular feature, separators are provided between the axial bearingless motor and the radial electromagnetic means for levitating the iron shaft.

The axial bearingless motor advantageously comprises a rotor portion having a plurality of pole pairs armatures and first and second stator portions each comprising a core with slots respectively for receiving windings configured to impress a motor torque and an axial bearing force, the first and second stator portions being located on each side of the rotor portion.

Separate windings may be provided in the slots of the first and second stator portions for respectively impressing a motor torque and an axial bearing force.

Alternatively common windings are provided in the slots of the first and second stator portions for impressing a motor torque and an axial bearing force.

The axial bearingless motor may comprise a rotor portion chosen among an induction rotor, a permanent magnet rotor, a hysteresis rotor and a reluctance rotor.

According to a specific embodiment the centrifugal compressor portion comprises a wheel at a first end of said shaft and control circuits associated with the axial bearingless motor and said radial electromagnetic means are located at a second end of said shaft and are connected to said axial bearingless motor and said radial electromagnetic means via a feedthrough.

The invention further relates to an electric compressor for a vehicle, wherein said motor portion comprises an electric motor and said electromagnetic means for levitating the shaft comprise an active axial magnetic bearing, and first and second active radial magnetic bearings located on each side of the electric motor.

In such a case if the centrifugal compressor portion comprises at least one wheel at a first end of said shaft, the active axial magnetic bearing may be located in the vicinity of said centrifugal compressor portion and control circuits associated with the electric motor, the active axial magnetic bearing and said first and second active radial magnetic bearings may be located at a second end of said shaft and are connected to said electric motor, said active axial magnetic bearing and said first and second active radial magnetic bearings via a feedthrough.

### BRIEF DESCRIPTION OF THE DRAWINGS

Fig. 1 is a schematic longitudinal sectional view of an electric compressor comprising a compressor portion and a motor portion comprising an electric motor, two radial magnetic bearings and a magnetic thrust bearing and further schematically showing a control device ;
Fig. 2 is another schematic longitudinal sectional view of an electric compressor comprising a compressor portion and a motor portion comprising an electric motor, two radial magnetic bearings and a magnetic thrust bearing;
Fig. 3 is another schematic longitudinal sectional view of an electric compressor comprising a compressor portion and a motor portion comprising an electric motor, two radial magnetic bearings and a magnetic thrust bearing which is divided into two parts;
Fig. 4 is a schematic longitudinal sectional view of an electric compressor comprising a compressor portion (not shown) and a motor portion comprising an axial bearingless motor and two radial magnetic bearings or two radial bearingless motors;
Fig. 5 is a perspective view of an axial bearingless motor (the winding being not represented);
Fig. 6 is a perspective view of a radial bearingless motor (the winding being not represented);
Fig. 7 is a schematic view of an example of compressor portion comprising double wheels;
Fig. 8 is a schematic view of an example of compressor portion comprising tandem wheels; and
Fig. 9 is a schematic view of an example of compressor portion comprising double tandem wheels.

### DESCRIPTION OF THE EMBODIMENTS

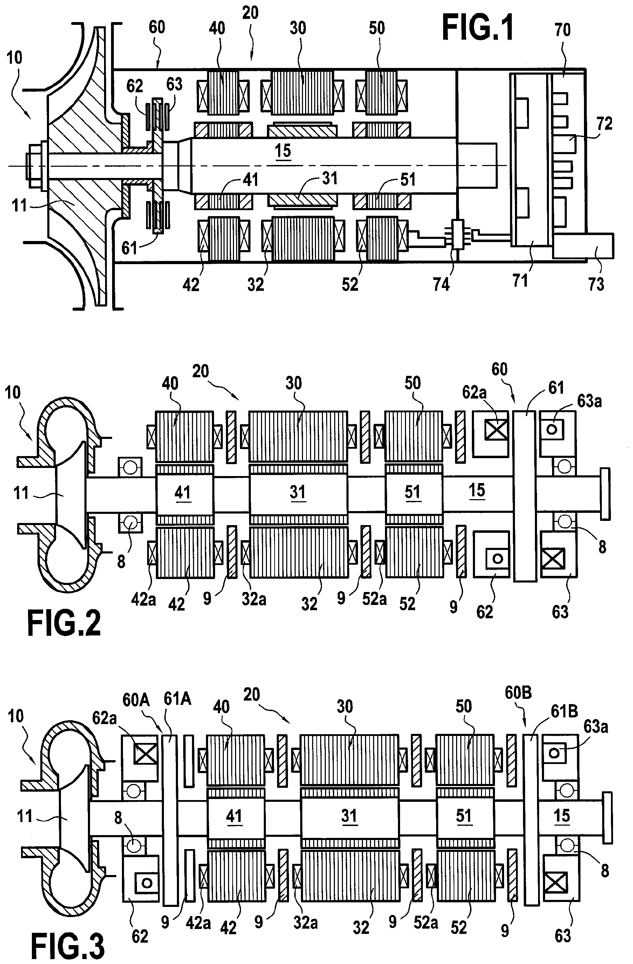

Figure 2 shows an example of a centrifugal electric compressor for heat ventilation air conditioning (HVAC) which may be dedicated for hybrid electric vehicles (HEV) or electric vehicles (EV) or else for aircrafts or other types of vehicles. Such centrifugal electric compressor may also be applied to boost a turbocharger.

A shaft 15 of a motor portion 20 is coupled to a centrifugal compressor wheel 11 of a compressor portion 10 to drive the centrifugal compressor wheel 11.

An electrical motor 30 comprises a rotor 31 which may be of any type chosen among induction rotor, permanent magnet rotor, hysteresis rotor and reluctance rotor. The electrical motor 30 further comprises a stator 32 with windings 32a.

First and second active radial magnetic bearings 40, 50 are located on each side of the electrical motor 30 to support the shaft 15 in levitation during functional operation of the electric compressor. Each active radial magnetic bearing 40, 50 comprises a rotor 41, 51 fast with the shaft 15 and a stator 42, 52 with windings 42a, 52a.

An active axial magnetic bearing 60 (thrust bearing) comprises on the one hand a disc 61 which is mounted perpendicular to the axis of the shaft 15 and constitutes a rotor armature and on the other hand first and second stators 62, 63 each having at least one annular coil or winding 62a, 63a located in a stator 62, 63 which may have a C-shaped core, as shown in figure 2. Alternatively each stator 62, 63 could have an E-shaped core with two coils.

The radial bearing rotors 41, 51 are equipped with ferromagnetic laminations which are held in position by the magnetic fields created by the electromagnets of the stators 42, 52.

The shaft 15 is levitated in a contactless manner due to the radial magnetic bearings. The shaft's position is monitored by sensors (not shown), e.g. of the variable inductive type, which detect any deviation from nominal position and emit signals which are used in a control system (not shown in figure 2) to command currents in the windings 42a, 52a of the radial bearings in order to bring the shaft 15 back to its nominal position. The axial bearing 60 is based on the same principle and sensors (not shown) send signals to a controller to adjust command currents in the coils 62a, 63a of the axial bearing 60 to adjust the axial position of the shaft 15.

Auxiliary landing bearings 8 are used for supporting the shaft 15 essentially during a starting or stopping operation of the motor portion 20, but also during brief intermittent periods in case of shock-loads due to the usually high level of vibrations present in a vehicle.

Generally speaking where a rotary shaft is suspended by means of an active magnetic suspension servo-controlled on the basis of sensors for detecting the position of the rotary shaft, auxiliary bearings, also known as emergency bearings, are provided in order to support the shaft while the machine is being stopped or in the event of a total or partial failure of the magnetic suspension, thereby preventing direct contact between the magnetic circuits of the rotors and the stators of the magnetic bearings or bearingless motors when the windings of the stator electromagnets are not properly powered, thus avoiding damage to the laminations thereof. In normal operation, auxiliary bearings leave clearance about the rotary shaft and do not themselves rotate. The clearance provided for the auxiliary bearings is generally about one half the width of the air gap of the magnetic bearings or bearingless motors.

The auxiliary landing/touch down bearings 8 may have a variety of designs and may be for example rolling bearings, needle bearings, plain bearings, bushings, etc...

Separators 9 may be located between the stator windings of the magnetic bearings 40, 50, 60 and of the electrical motor 30.

The casing or flanges and cooling systems with a refrigerant are conventional and are not represented in the drawings.

In figure 2 the axial bearing 60 comprises a disc 61 and two stators 62, 63 located at an end of the shaft 15, whereas the compressor wheel is located at the other end of the shaft. However, as shown in figure 1, the axial bearing 60 can also be located on the same side than the compressor wheel 11.

As shown in figure 1, control circuits 70 comprising a variable frequency drive 71 and amplifiers 72 associated with the electrical motor 30 and the radial electromagnetic bearings 40, 50, 60 are integrated in a flange and located at a second end of the shaft 15 which may be an iron shaft. The control circuits 70 are connected to the electrical motor 30 and to the radial and axial electromagnetic bearings via a feedthrough 74. A connector 73 serves to connect the control circuits 70 to a further controller located remote from the electric compressor.

Figure 3 shows an embodiment which is similar to the embodiment of figure 2, but the axial magnetic bearing is split into two parts 60A, 60B which are located at both ends of the shaft 15. A disc armature 61A integral with the shaft 15 is located at a first end of the shaft 15 near the compressor wheel 11 and cooperates with a first stator 62 having a first coil 62a which could be similar to the stator 62 of figure 1. A disc armature 61B integral with the shaft 15 is located at a second end of the shaft 15 and cooperates with a second stator 63 having a second coil 63a which could be similar to the stator 63 of figure 1.

Figures 1 to 3 show a compressor portion 10 having a single wheel. However other designs of the compressor portion 10 may be used in combination with the different embodiments disclosed herein.

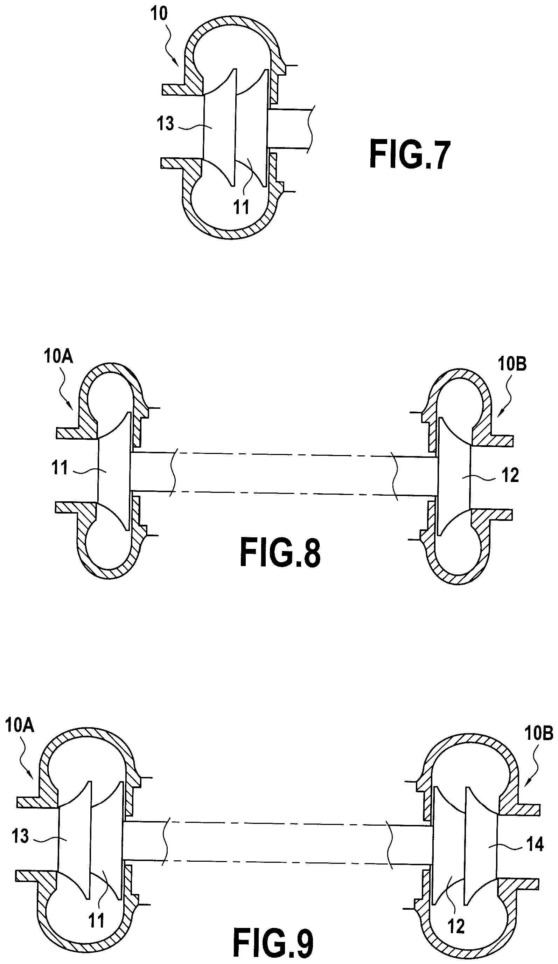

Thus as shown in figure 7, a compressor portion 10 may include double wheels 11, 13. As shown in figure 8, a compressor portion 10A, 10B may include tandem wheels 11, 12. As shown in figure 9, a compressor portion 10A, 10B may include double tandem wheels 11, 13, 12, 14. The configurations of compressor wheels according to figures 7 to 9 are intended either to increase the pressure ratio or to increase the flow.

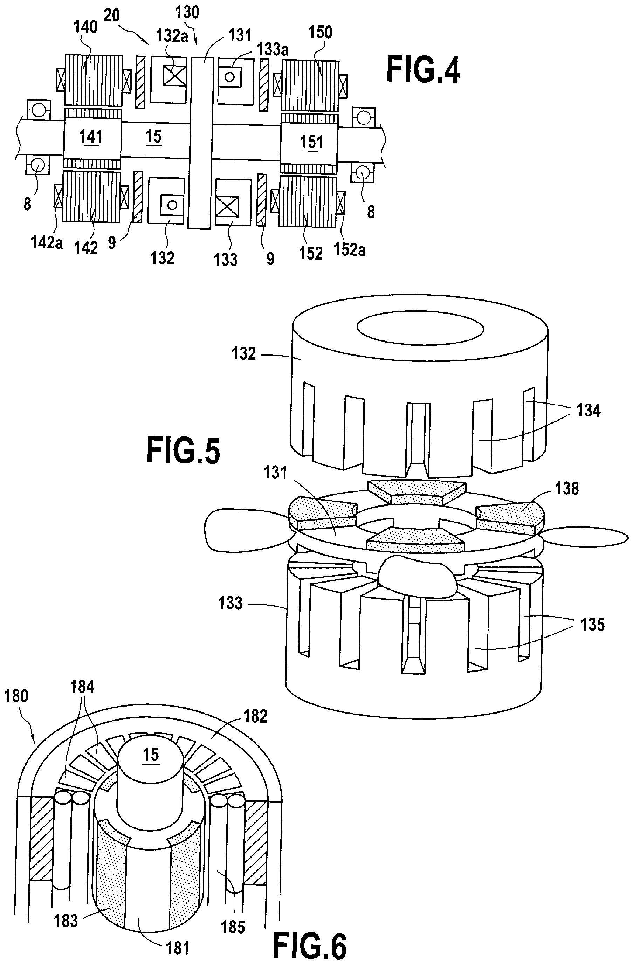

Preferred embodiments of the invention will now be described in connection with figures 4 to 6.

Figure 4 shows an embodiment with shaft 15 which may be an iron shaft and a motor portion 20 which are more compact than the embodiments of figures 1 to 3 since the electrical motor 30 and the axial bearing 60 or 60A, 60B are replaced by a single axial bearingless motor 130. In figure 4, the compressor portion 10 has been omitted but may be realized as previously described with reference to figures 1 to 3 and 7 to 9.

The embodiment of figure 4 allows reducing the shaft length and hence improves the overall layout.

The axial bearingless motor 130 comprises a disc-like central armature 131 integral with the shaft 15 and first and second stators 132 and 133 with windings 132a, 133a.

Figure 5 shows in perspective an example of a possible configuration of an axial bearingless motor 130. The axial bearingless motor 130 of figure 5 comprises a rotor portion 131 having a plurality of pole pairs armatures 138 and first and second stator portions 132, 133 each comprising a core with slots 134, 135 respectively for receiving windings (not shown in figure 5) configured to impress a motor torque and an axial bearing force, the first and second stator portions 132, 133 being located on each side of the rotor portion 131.

In the stator portions 132, 133 of the axial bearingless motor separated coils may be used to impress the bearing force and the motor torque.

Alternatively the needed bearing force and motor torque may be generated in each coil by combined windings. In such a case a single coil will carry jointly the required motor and bearing ampere-turns.

A plurality of pole pairs armatures 138 are shown in figure 5 by way of example. However the rotor 131 may carry different structural elements depending on the chosen principle (permanent magnet, induction, switched reluctance, hysteresis).

As a non limiting example, the stator 132 and the rotor 131 with permanent magnets 138 may constitute a permanent magnet motor, where the permanent magnets 138 on the rotor surface produce an axial force in a first direction (upward direction in the configuration of figure 5), whereas the stator 133 and rotor 131 may constitute a synchronous reluctance motor, where the winding currents of the synchronous reluctance motor produce an adjustable axial force in the opposite direction with respect to the first direction (downward direction in the configuration of figure 5). The axial position of the rotor can thus be controlled by the currents of the synchronous motor. However as mentioned above other combinations of motor types may be chosen as soon as the axial bearingless motor 130 achieves the two functions of impressing a motor torque and an axial bearing force.

Active radial magnetic bearings 140 and 150 similar to previously described active radial magnetic bearings 40 and 50 and comprising a rotor armature 141, 151 and a stator 142, 152 with windings 142a, 152a may be located on each side of the axial bearingless motor 130.

However according to another embodiment each active radial magnetic bearing 140, 150 may be replaced by a radial bearingless motor 180.

An example of radial bearingless motor 180 is represented in figure 6. Such radial bearingless motor 180 comprises a rotor 181 integral with the shaft 15 and a stator 182 with slots 184 for receiving coils 185. The rotor 181 carries different structural elements 183 depending on the chosen principle (permanent magnet, induction, switched reluctance, hysteresis).

Basically the stator windings 185 achieve both functions of torque windings and suspension force windings. As an example if two magnetic fields, which may be created by two winding sets with a difference in the pole pair number of one, are superposed, a torque and a radial force will be produced. It is thus possible for example to combine a 4-pole motor winding of a reluctance motor with a 2-pole bearing winding, but many other embodiments are possible.

Although preferred embodiments of the invention have been shown in figures 4 to 9 and described, it should be understood that any changes and modifications may be made therein without departing from the scope of the invention as defined in the appended claims.

In figure 4 reference numeral 130 designates an axial bearingless motor located between two radial electromagnetic means 140, 150 for supporting the shaft 15. If the radial electromagnetic means 140, 150 comprise first and second radial bearingless motors 180 such as disclosed for example in figure 6, an axial active magnetic bearing such as the thrust bearing 60 illustrated in prior art figure 2 could be substituted for the axial bearingless motor 130.

## Claims

1. An electric compressor for a heat ventilation air conditioning system for vehicles, said electric compressor comprising a motor portion (20) and a centrifugal compressor portion (10) driven by said motor portion (20) through a shaft (15), wherein it further comprises electromagnetic means for levitating said shaft (15) during functional operation of said electric compressor and auxiliary landing bearings (8), **characterized in that** said motor portion (20) comprises an axial bearingless motor (130) and said electromagnetic means for levitating said shaft (15) comprise first and second radial bearingless motors (180).

2. The electric compressor according to claim 1, wherein separators (9) are provided between the axial bearingless motor (130) and said radial electromagnetic means for levitating said shaft (15).

3. The electric compressor according to claim 1 or claim 2, wherein the axial bearingless motor (130) comprises a rotor portion (131) having a plurality of pole pairs armatures (138) and first and second stator portions (132, 133) each comprising a core with slots (134, 135) respectively for receiving windings configured to impress a motor torque and an axial bearing force, the first and second stator portions (132, 133) being located on each side of the rotor portion (131).

4. The electric compressor according to claim 3, wherein separate windings (132a, 133a) are provided in the slots (134, 135) of the first and second stator portions (132, 133) for respectively impressing a motor torque and an axial bearing force.

5. The electric compressor according to claim 3, wherein common windings (132a, 133a) are provided in the slots (134, 135) of the first and second stator portions (132, 133) for impressing a motor torque and an axial bearing force.

6. The electric compressor according to claim 1, wherein the axial bearingless motor (130) comprises a rotor portion (131) chosen among an induction rotor, a permanent magnet rotor, a hysteresis rotor and a reluctance rotor.

7. The electric compressor according to claim 1, wherein the centrifugal compressor portion (10) comprises a wheel (11) at a first end of said shaft (15) and wherein control circuits (70) associated with the axial bearingless motor (130) and said radial electromagnetic means are located at a second end of said shaft (15) and are connected to said axial bearingless motor (130) and said radial electromagnetic means via a feedthrough (74).

8. The electric compressor according to anyone of claims 1 to 6, wherein the centrifugal compressor portion (10A, 10B) comprises tandem wheels (11, 12).

9. The electric compressor according to anyone of claims 1 to 6, wherein the centrifugal compressor portion (10A, 10B) comprises double tandem wheels (11, 13, 12, 14).

10. The electric compressor according to anyone of claims 1 to 7, wherein the centrifugal compressor portion (10) comprises double wheels (11, 13).

## Patentansprüche

1. Elektrischer Verdichter für ein Heizungs-/Lüftungs-/Klimatisierungssystem für Fahrzeuge, wobei der elektrische Verdichter einen Motorteil (20) und einen Zentrifugalverdichterteil (10) umfasst, angetrieben durch den Motorteil (20) über eine Welle (15), wobei er ferner elektromagnetische Mittel zum Schwebenlassen der Welle (15) während des funktionalen Betriebs des elektrischen Verdichters und zusätzliche Landungslager (8) umfasst, **dadurch gekennzeichnet, dass** der Motorteil (20) einen axialen lagerlosen Motor (130) umfasst und dass die elektromagnetischen Mittel zum Schwebenlassen der Welle (15) erste und zweite radiale lagerlose Motoren (180) umfassen.

2. Elektrischer Verdichter nach Anspruch 1, wobei Separatoren (9) zwischen dem axialen lagerlosen Motor (130) und den radialen elektromagnetischen Mitteln zum Schwebenlassen der Welle (15) bereitgestellt sind.

3. Elektrischer Verdichter nach Anspruch 1 oder Anspruch 2, wobei der axiale lagerlose Motor (130) einen Rotorteil (131) mit mehreren Polpaarankern (138) und einen ersten und einen zweiten Statorteil (132, 133), jeweils einen Kern mit Schlitzen (134, 135) umfassend, entsprechend zum Aufnehmen von Wicklungen zum Aufprägen eines Motordrehmoments und einer axialen Lagerkraft umfasst, wobei der erste und der zweite Statorteil (132, 133) auf jeder Seite des Rotorteils (131) befindlich sind.

4. Elektrischer Verdichter nach Anspruch 3, wobei separate Wicklungen (132a, 133a) in den Schlitzen (134, 135) des ersten und des zweiten Statorteils (132, 133) bereitgestellt sind zum entsprechenden Aufprägen eines Motordrehmoments und einer axialen Lagerkraft.

5. Elektrischer Verdichter nach Anspruch 3, wobei gemeinsame Wicklungen (132a, 133a) in den Schlitzen (134, 135) des ersten und des zweiten Statorteils (132, 133) bereitgestellt sind zum Aufprägen eines Motordrehmoments und einer axialen Lagerkraft.

6. Elektrischer Verdichter nach Anspruch 1, wobei der axiale lagerlose Motor (130) einen Rotorteil (131) umfasst, der ausgewählt wird aus einem Induktionsrotor, einem Permanentmagnetrotor, einem Hystereserotor und einem Reluktanzrotor.

7. Elektrischer Verdichter nach Anspruch 1, wobei der Zentrifugalverdichterteil (10) ein Rad (11) an einem ersten Ende der Welle (15) umfasst und wobei Steuerschaltungen (70) in Verbindung mit dem axialen lagerlosen Motor (130) und den radialen elektromagnetischen Mitteln an einem zweiten Ende der Welle (15) befindlich sind und mit dem axialen lagerlosen Motor (130) und den radialen elektromagnetischen Mitteln über eine Durchführung (74) verbunden sind.

8. Elektrischer Verdichter nach einem der Ansprüche 1 bis 6, wobei der Zentrifugalverdichterteil (10A, 10B) Tandemräder (11, 12) umfasst.

9. Elektrischer Verdichter nach einem der Ansprüche 1 bis 6, wobei der Zentrifugalverdichterteil (10A, 10B) doppelte Tandemräder (11, 13, 12, 14) umfasst.

10. Elektrischer Verdichter nach einem der Ansprüche 1 bis 7, wobei der Zentrifugalverdichterteil (10) Doppelräder (11, 13) umfasst.

## Revendications

1. Compresseur électrique pour système de chauffage-ventilation-climatisation pour véhicules, ledit compresseur électrique comportant une partie (20) de moteur et une partie (10) de compresseur centrifuge entraînée par ladite partie (20) de moteur par l'intermédiaire d'un arbre (15), celui-ci comportant en outre des moyens électromagnétiques servant à faire léviter ledit arbre (15) pendant l'exploitation fonctionnelle dudit compresseur électrique et des paliers auxiliaires (8) de posé, **caractérisé en ce que** ladite partie (20) de moteur comporte un moteur axial (130) sans paliers et **en ce que** lesdits moyens électromagnétiques servant à faire léviter ledit arbre (15) comportent des premier et second moteurs radiaux (180) sans paliers.

2. Compresseur électrique selon la revendication 1, des séparateurs (9) étant placés entre le moteur axial (130) sans paliers et lesdits moyens électromagnétiques radiaux servant à faire léviter ledit arbre (15).

3. Compresseur électrique selon la revendication 1 ou la revendication 2, le moteur axial (130) sans paliers comportant une partie (131) de rotor dotée d'une pluralité de armatures (138) de paires de pôles et des première et seconde parties (132, 133) de stator comportant chacune un noyau doté de fentes (134, 135) servant respectivement à recevoir des enroulements configurés pour exercer un couple moteur et un effort d'appui axial, les première et seconde parties (132, 133) de stator étant situées sur chaque côté de la partie (131) de rotor.

4. Compresseur électrique selon la revendication 3, des enroulements (132a, 133a) séparés étant placés dans les fentes (134, 135) des première et seconde parties (132, 133) de stator pour exercer respectivement un couple moteur et un effort d'appui axial.

5. Compresseur électrique selon la revendication 3, des enroulements (132a, 133a) communs étant placés dans les fentes (134, 135) des première et seconde parties (132, 133) de stator pour exercer un couple moteur et un effort d'appui axial.

6. Compresseur électrique selon la revendication 1, le moteur axial (130) sans paliers comportant une partie (131) de rotor choisie parmi un rotor à induction, un rotor à aimants permanents, un rotor à hystérésis et un rotor à réluctance.

7. Compresseur électrique selon la revendication 1, la partie (10) de compresseur centrifuge comportant une roue (11) à une première extrémité dudit arbre (15) et des circuits (70) de commande associés au moteur axial (130) sans paliers et auxdits moyens électromagnétiques radiaux étant situés à une seconde extrémité dudit arbre (15) et étant reliés audit moteur axial (130) sans paliers et auxdits moyens électromagnétiques radiaux via une traversée (74).

8. Compresseur électrique selon l'une quelconque des revendications 1 à 6, la partie (10A, 10B) de compresseur centrifuge comportant des roues (11, 12) en tandem.

9. Compresseur électrique selon l'une quelconque des revendications 1 à 6, la partie (10A, 10B) de compresseur centrifuge comportant des roues (11, 13, 12, 14) en double tandem.

10. Compresseur électrique selon l'une quelconque des revendications 1 à 7, la partie (10) de compresseur centrifuge comportant des roues doubles (11, 13).
